# EUROPEAN PATENT APPLICATION

(11) **EP 4 462 899 A1**
(43) Date of publication of application: **13.11.2024**
(21) Application number: 22918453.6
(22) Date of filing: 27.12.2022
(51) Int. Cl.: H04W 64/00

(54) **MEASUREMENT GAP DETERMINING METHOD, CONFIGURATION METHOD AND APPARATUS, TERMINAL, AND BASE STATION**

(30) Priority: 05.01.2022 CN 202210005136
(71) Applicant: Datang Mobile Communications Equipment Co., Ltd., Beijing 100085 (CN)
(72) Inventor: LI, Jianxiang, Beijing 100085 (CN)
(74) Representative: Maiwald GmbH
(86) International application number: PCT/CN2022/142493
(87) International publication number: WO 2023/131012

(57) **Abstract**

This application provides a method and an apparatus for determining a measurement gap, a method and an apparatus for configuring a measurement gap, a terminal and a base station. The method includes: obtaining, by a terminal, pre-configured measurement gap information, wherein the measurement gap information includes N measurement gap combinations, and N is an integer greater than or equal to 1; and requesting, by the terminal, activating at least one measurement gap combination in the measurement gap information through a medium access layer control unit MAC CE or control information.

## Description

### CROSS-REFERENCE TO RELATED APPLICATION

This application claims a priority to Chinese Patent Application No. 202210005136.6 filed in China on January 05, 2022, the disclosure of which is incorporated by reference herein in its entirety.

### TECHNICAL FIELD

The present disclosure relates to the field of communications technology, in particular to a method and an apparatus for determining a measurement gap, a method and an apparatus for configuring a measurement gap, a terminal and a base station.

### BACKGROUND

In the relevant positioning mechanism, the terminal requests a measurement gap for measurement of observed time difference of arrival (Observed Time Difference of Arrival, OTDOA) or reference signal time difference (Reference Signal Time Difference, RSTD) through a location measurement indication procedure.

However, in the relevant positioning mechanism, each time when a terminal receives a positioning request, the terminal needs to request a measurement gap of a positioning signal from a serving base station, and the serving base station configures a positioning measurement gap for the terminal according to the measurement gap requested by the terminal, so as to support the positioning signal measurement of the terminal. Since it is necessary to ensure that there is no uplink and downlink data service when measuring a positioning reference signal (Positioning Reference Signal, PRS), the terminal needs to temporarily make a request to the network each time when there is a need for positioning measurement. Such steps lead to an increase in a positioning delay of the terminal.

In case of positioning services oriented to low-latency industrial Internet of things (Industrial Internet of Things, IIOT) scenarios, the positioning delay needs to be further decreased to satisfy the requirement of the IIOT scenarios for the positioning delay. However, the relevant positioning mechanism cannot satisfy the requirement of application scenarios where the positioning delay is lower.

### SUMMARY

Embodiments of the present disclosure is to provide a method and an apparatus for determining a measurement gap, a method and an apparatus for configuring a measurement gap, a terminal and a base station, so as to solve the problem that the relevant positioning mechanism cannot satisfy the requirement of scenarios where a positioning delay is lower.

In order to solve the above problem, an embodiment of the present disclosure provides a method for determining a measurement gap, including:
obtaining, by a terminal, pre-configured measurement gap information, where the measurement gap information includes N measurement gap combinations, and N is an integer greater than or equal to 1; and
requesting, by the terminal, activating at least one measurement gap combination in the measurement gap information through a medium access layer control unit (MAC CE) or control information.

Optionally, the measurement gap combination includes at least one of: a positioning reference signal (PRS) frequency point, a measurement period, a time-domain offset value, a measurement gap length, or a measurement gap timing advance.

Optionally, the requesting, by the terminal, activating the at least one measurement gap combination through the MAC CE or the control information includes: transmitting, by the terminal, a first MAC CE or uplink control information (UCI) to a base station, where the first MAC CE or the UCI carries identification information of the at least one measurement gap combination among the N measurement gap combinations.

Optionally, the method further includes:
receiving, by the terminal, a second MAC CE or downlink control information (DCI) transmitted by a base station, where the second MAC CE or the DCI is used to indicate a measurement gap combination to be activated; and
activating, by the terminal, the measurement gap combination indicated by the second MAC CE or the DCI, and performing a positioning measurement by using the activated measurement gap combination.

Optionally, the obtaining, by the terminal, the pre-configured measurement gap information includes:
receiving, by the terminal, the measurement gap information transmitted by a positioning server, where the measurement gap information is pre-configured by a base station, and then transmitted to the positioning server; or
receiving, by the terminal, the measurement gap information transmitted by a base station after the base station receives a first downlink PRS resource transmitted by a positioning server, where the first downlink PRS resource is a downlink PRS resource allocated by the positioning server to the terminal.

Optionally, the method further includes: deleting, by the terminal, the measurement gap information, after a current positioning service is completed.

Optionally, the obtaining, by the terminal, the pre-configured measurement gap information includes: receiving, by the terminal, a radio resource control (RRC) reconfiguration message transmitted by a base station, where the RRC reconfiguration message carries the measurement gap information.

Optionally, the method further includes: deactivating, by the terminal, a corresponding measurement gap combination after a current positioning service is completed, and saving the measurement gap information, where the saved measurement gap information is used for a positioning measurement of another positioning service.

Optionally, the deactivating, by the terminal, the corresponding measurement gap combination includes:
transmitting, by the terminal, deactivation request information to the base station, where the deactivation request information carries identification information of a measurement gap combination for which deactivation is requested;
receiving, by the terminal, deactivation indication information transmitted by the base station, where the deactivation indication information carries identification information of a measurement gap combination to be deactivated by the terminal; and
deactivating, by the terminal, the measurement gap combination indicated by the deactivation indication information according to the deactivation indication information.

An embodiment of the present disclosure further provides a method for configuring a measurement gap, including:
pre-configuring, by a base station, measurement gap information for a terminal, where the measurement gap information includes N measurement gap combinations, and N is an integer greater than or equal to 1; and
activating, by the base station, at least one measurement gap combination in the measurement gap information through a medium access layer control unit (MAC CE) or control information, where the activated measurement gap combination is used for a positioning measurement for the terminal.

Optionally, the pre-configuring, by the base station, the measurement gap information for the terminal includes:
pre-configuring, by the base station, the measurement gap information for the terminal, in a case where the base station receives a downlink PRS resource of a neighboring cell around the base station from a positioning server; or
pre-configuring, by the base station, the measurement gap information for the terminal, in a case where the base station receives a downlink PRS resource configured by a positioning server for the terminal from the positioning server.

Optionally, the measurement gap combination includes at least one of: a positioning reference signal (PRS) frequency point, a measurement period, a time-domain offset value, a measurement gap length, or a measurement gap timing advance.

Optionally, the pre-configuring, by the base station, the measurement gap information for the terminal includes:
transmitting, by the base station, the measurement gap information to a positioning server, to enable the positioning server to transmit the measurement gap information to the terminal; or
transmitting, by the base station, the measurement gap information to the terminal, after a first downlink PRS resource is received from a positioning server, where the first downlink PRS resource is a downlink PRS resource allocated by the positioning server for the terminal; or
transmitting, by the base station, a radio resource control (RRC) reconfiguration message to the terminal, where the RRC reconfiguration message carries the measurement gap information.

Optionally, the activating, by the base station, the at least one measurement gap combination in the measurement gap information through the MAC CE or the control information includes:
receiving, by the base station, a first MAC CE or uplink control information (UCI) transmitted by the terminal, where the first MAC CE or the UCI carries identification information of the at least one measurement gap combination among the N measurement gap combinations; and
transmitting, by the base station, a second MAC CE or downlink control information (DCI) to the terminal, where the second MAC CE or the DCI is used to indicate a measurement gap combination to be activated.

Optionally, in a case where the measurement gap information is carried by the RRC reconfiguration message, the method further includes:
receiving, by the base station, a deactivation request information transmitted by the terminal, where the deactivation request information carries identification information of a measurement gap combination for which deactivation is requested; and
transmitting, by the base station, deactivation indication information to the terminal according to the deactivation request information, where the deactivation indication information carries identification information of a measurement gap combination to be deactivated by the terminal.

An embodiment of the present disclosure further provides an apparatus for determining a measurement gap, including:
an obtaining unit, configured to obtain pre-configured measurement gap information, where the measurement gap information includes N measurement gap combinations, and N is an integer greater than or equal to 1; and
an activation request unit, configured to request activating at least one measurement gap combination in the measurement gap information through a medium access layer control unit (MAC CE) or control information.

An embodiment of the present disclosure further provides a terminal, including a memory, a transceiver and a processor, where the memory is configured to store a computer program, the transceiver is configured to transmit and receive data under the control of the processor, the processor is configured to read the computer program in the memory and perform the following operations:
obtaining pre-configured measurement gap information, where the measurement gap information includes N measurement gap combinations, and N is an integer greater than or equal to 1; and
requesting activating at least one measurement gap combination in the measurement gap information through a medium access layer control unit (MAC CE) or control information.

Optionally, the measurement gap combination includes at least one of: a positioning reference signal (PRS) frequency point, a measurement period, a time-domain offset value, a measurement gap length, or a measurement gap timing advance.

Optionally, the processor is further configured to read the computer program in the memory and perform the following operations:
receiving the measurement gap information transmitted by a positioning server, where the measurement gap information is pre-configured by a base station, and then transmitted to the positioning server; or
receiving the measurement gap information transmitted by a base station after the base station receives a first downlink PRS resource transmitted by a positioning server, where the first downlink PRS resource is a downlink PRS resource allocated by the positioning server to the terminal.

Optionally, the processor is further configured to read the computer program in the memory and perform the following operations: receiving a radio resource control (RRC) reconfiguration message transmitted by a base station, where the RRC reconfiguration message carries the measurement gap information.

Optionally, the processor is further configured to read the computer program in the memory and perform the following operations: after a current positioning service is completed, deactivating a corresponding measurement gap combination, saving the measurement gap information until the terminal receives an RRC release signaling, and at this time, deleting the measurement gap information, where the saved measurement gap information is used for a positioning measurement of another positioning service.

An embodiment of the present disclosure further provides an apparatus for configuring a measurement gap, including:
a configuration unit, configured to pre-configure measurement gap information for a terminal, where the measurement gap information includes N measurement gap combinations, and N is an integer greater than or equal to 1; and
an activation unit, configured to activate at least one measurement gap combination in the measurement gap information through a medium access layer control unit (MAC CE) or control information, where the activated measurement gap combination is used for a positioning measurement for the terminal.

An embodiment of the present disclosure further provides a base station, including a memory, a transceiver and a processor, where the memory is configured to store a computer program; the transceiver is configured to transmit and receive data under the control of the processor; the processor is configured to read the computer program in the memory and perform the following operations:
pre-configuring measurement gap information for a terminal, where the measurement gap information includes N measurement gap combinations, and N is an integer greater than or equal to 1; and
activating at least one measurement gap combination in the measurement gap information through a medium access layer control unit (MAC CE) or control information, where the activated measurement gap combination is used for a positioning measurement for the terminal.

Optionally, the processor is further configured to read the computer program in the memory and perform the following operations:
pre-configuring the measurement gap information for the terminal, in a case where the base station receives a downlink PRS resource of a neighboring cell around the base station from a positioning server; or
pre-configuring the measurement gap information for the terminal, in a case where the base station receives a downlink PRS resource configured by a positioning server for the terminal from the positioning server.

Optionally, the processor is further configured to read the computer program in the memory and perform the following operations:
transmitting the measurement gap information to a positioning server, to enable the positioning server to transmit the measurement gap information to the terminal; or
transmitting the measurement gap information to the terminal, after a first downlink PRS resource is received from a positioning server, where the first downlink PRS resource is a downlink PRS resource allocated by the positioning server for the terminal; or
transmitting a radio resource control (RRC) reconfiguration message to the terminal, where the RRC reconfiguration message carries the measurement gap information.

An embodiment of the present disclosure further provides a processor-readable storage medium. A computer program is stored in the processor-readable storage medium, and the computer program is configured to cause a processor to execute the above method.

The above-mentioned technical solutions of the present disclosure have at least the following beneficial effects. In the method and an apparatus for determining a measurement gap, the method and the apparatus for configuring a measurement gap, the terminal and the base station according to the embodiments of the present disclosure, a base station pre-configures measurement gap information for a terminal, and quickly activates a measurement gap combination through MAC CE or control information in a procedure of positioning measurement. It avoids that the terminal does not start to transmit a request for a positioning measurement gap through RRC signaling until there is a positioning measurement, thereby reducing an interaction delay between the terminal and the network in the process of positioning, and further reducing a positioning delay.

### BRIEF DESCRIPTION OF THE DRAWINGS

FIG. 1 shows a block diagram of a wireless communication system to which an embodiment of the present disclosure is applicable;
FIG. 2 shows a flow chart of steps of a method for determining the measurement gap according to an embodiment of the present disclosure;
FIG. 3 shows a flow chart of steps of a method for configuring a measurement gap according to an embodiment of the present disclosure;
FIG. 4 shows a schematic structural diagram of a method for determining a measurement gap according to an embodiment of the present disclosure;
FIG. 5 shows a schematic structural diagram of a terminal according to an embodiment of the present disclosure;
FIG. 6 shows a schematic structural diagram of an apparatus for configuring a measurement gap according to an embodiment of the present disclosure; and
FIG. 7 shows a schematic structural diagram of a base station according to an embodiment of the present disclosure.

### DETAILED DESCRIPTION

In order to make the to-be-solved technical problem, the technical solution and advantages of the present disclosure clearer, detailed description will be given below with reference to the drawings and specific embodiments.

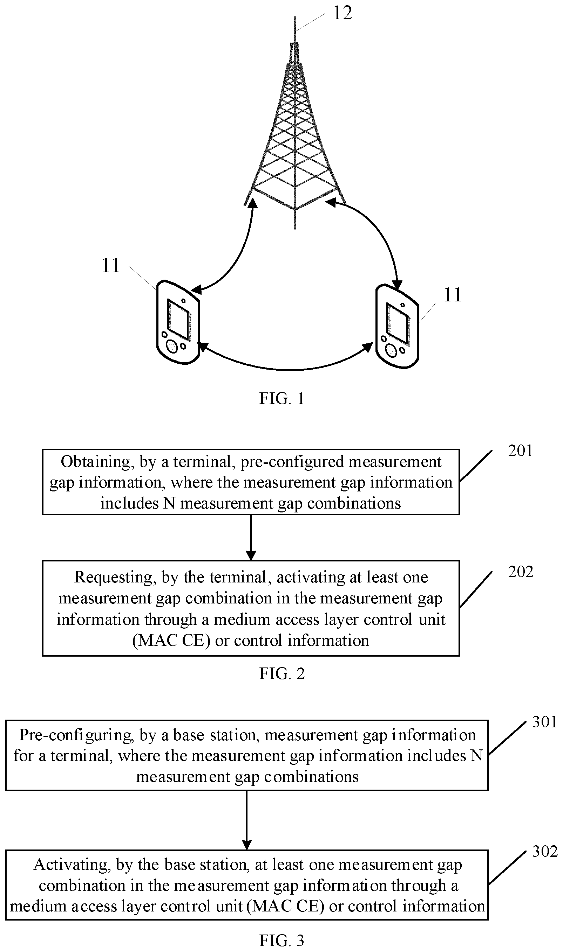

FIG. 1 shows a block diagram of a wireless communication system to which an embodiment of the present disclosure is applicable. The wireless communication system includes a terminal 11 and a network-side device 12. The terminal 11 may also be referred to as a terminal device or a user equipment (User Equipment, UE). It should be noted that, the specific type of the terminal 11 is not limited in the embodiments of the present disclosure. The network-side device 12 may be a base station or a core network. It should be noted that, in the embodiments of the present disclosure, a base station in a new radio (New Radio, NR) system is just taken as an example, and the specific type of the base station is not limited.

The term "and/or" in embodiments of the present disclosure describes the association relationship of associated objects and indicates that there may be three types of relationships. For example, A and/or B may represent three situations including: A alone, both A and B, and B alone. The character "/" generally indicates that the associated objects are in an "or" relationship.

The term "multiple" used in the embodiments of the present disclosure refers to two or more, and other quantifiers are similar thereto.

In the following, technical solutions in the embodiments of the present disclosure will be described in a clear and thorough manner with reference to the drawings in the embodiments of the present disclosure. Apparently, the described embodiments are merely a part of, rather than all of, the embodiments of the present disclosure. Based on the embodiments of the present disclosure, a person skilled in the art may, without creative effort, obtain other embodiments, all of which shall fall within the scope of the present disclosure.

The technical solutions provided by the embodiments of the present disclosure can be applied to various systems, particularly to a 5G system. For example, an applicable system may be a global system of mobile communication (global system of mobile communication, GSM) system, a code division multiple access (code division multiple access, CDMA) system, a wideband code division multiple access (Wideband Code Division Multiple Access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, and a 5G New Radio (NR) system. Each of the various systems includes a terminal and a network device. The systems may further include a core network portion, such as an evolved packet system (Evolved Packet System, EPS), or a 5G system (5GS).

The UE involved in the embodiments of the present disclosure may be a device that provides voice and/or data connectivity to a user, a handheld device with a radio connection function, or other processing devices connected to a radio modem or the like. In different systems, the names of terminal may be different. For example, in a 5G system, a terminal may be referred to as user equipment (User Equipment, UE). A wireless terminal can communicate with one or more core networks (Core Network, CN) via a radio access network (Radio Access Network, RAN), and the wireless terminal may be a mobile terminal, such as a mobile phone (or referred to as "cellular" phone) and a computer with a mobile terminal, such as a portable, pocket-sized, handheld, computer built-in or vehicle-mounted mobile apparatus, which exchange voice and/or data with the radio access network. For example, personal communication service (Personal Communication Service, PCS) phones, cordless phones, session initiated protocol (Session Initiated Protocol, SIP) phones, wireless local loop (Wireless Local Loop, WLL) stations, personal digital assistant (Wireless Local Loop, PDA) and other devices. The wireless terminal may also be referred to as a system, subscriber unit (subscriber unit), subscriber station (subscriber station), mobile station (mobile station), mobile (mobile), remote station (remote station), access point (access point), remote terminal (remote terminal), access terminal (access terminal), user terminal (user terminal), user agent (access terminal) and user device (user device), which are not limited in the embodiments of the present disclosure.

The base station involved in the embodiments of the present disclosure may be referred to as a network-side device. The base station may include multiple cells that provide services to terminals. Depending on the specific application scenario, the base station may be call referred to as access point, or may be a device in the access network that communicates over an air interface with wireless terminal devices through one or more sectors, or may be called another name. The network device may be used for converting the received radio frames into Internet protocol (Internet Protocol, IP) packets or vice versa, and serves as a router between the wireless terminals and the rest of the access network. The rest of the access network may include an IP communication network. The network-side device may also coordinate the attribute management of the air interface. For example, the network device involved in the embodiments of the present disclosure may be a base transceiver station (Base Transceiver Station, BTS) in the global system for mobile communications (Global System for Mobile communications, GSM) or code division multiple access (Code Division Multiple Access, CDMA), a NodeB in the wide-band code division multiple access (Wide-band Code Division Multiple Access, WCDMA), an evolved Node B (evolutional Node B, eNB or e-NodeB) in long term evolution (long term evolution, LTE) system, a 5G base station (gNB) in 5G network architecture (next generation system), a home evolved Node B (Home evolved Node B, HeNB), a relay node (relay node), a femto (femto), a pico (pico), or the like, which is not limited in the embodiments of the present disclosure. In some network architectures, the network-side device may include a centralized unit (centralized unit, CU) node and a distributed unit (distributed unit, DU) node, which may be geographically separated.

The network-side device and the terminal may each perform multi-input multi-output (Multi Input Multi Output, MIMO) transmission with each other by using one or more antennas. The MIMO transmission may be single user MIMO (Single User MIMO, SU-MIMO) or multiple user MIMO (Multiple User MIMO, MU-MIMO). According to the configuration and quantity of antenna combinations, the MIMO transmission may be 2 dimensional-MIMO (2D-MIMO), 3 dimensional-MIMO (3D-MIMO), full dimensional-MIMO (FD-MIMO) or massive-MIMO (massive-MIMO), and may be diversity transmission, pre-coded transmission, beam forming transmission, or the like.

As shown in FIG. 2, an embodiment of the present disclosure provides a method for determining a measurement gap, which includes:
step 201, obtaining, by a terminal, pre-configured measurement gap information, where the measurement gap information includes N measurement gap combinations, and N is an integer greater than or equal to 1; and
step 202, requesting, by the terminal, activating at least one measurement gap combination in the measurement gap information through a medium access layer control unit (MAC CE) or control information.

In the embodiment of the present disclosure, measurement of a positioning signal is implemented by pre-configuring measurement gap information, that is, a base station pre-configures the measurement gap information for a terminal, and quickly activates a measurement gap combination through MAC CE or control information during a positioning measurement, so as to realize positioning signal measurement. It avoids that the terminal does not start to transmit a request for a positioning measurement gap through RRC signaling until there is a positioning measurement, thereby reducing an interaction delay between the terminal and the network in the process of positioning, and further reducing a positioning delay.

As an optional embodiment, the measurement gap combination includes at least one of: a positioning reference signal (Positioning Reference Signal, PRS) frequency point, a measurement period (such as 20 ms, 40 ms, 80 ms, 160 ms), time-domain offset value (such as 2, 8, 16, 32, 64, 128), a measurement gap length (Meas Gap Length, MGL) (MGL, for example, 1.5 ms, 3 ms, 3.5 ms, 4 ms, 5.5 ms, 6 ms), a measurement gap timing advance (Measurement Gap Timing Advance, MGTA) (MGTA, for example, 0 ms, 0.25 ms, 0.5 ms). For example, each measurement gap combination corresponds to identification information. For example, different measurement gap combinations have different index identifiers (Identifier, ID), and the terminal and the base station may determine a corresponding measurement gap combination based on the index ID.

In at least one embodiment of the present disclosure, step 202 includes: transmitting, by the terminal, a first MAC CE or uplink control information (UCI) to a base station, where the first MAC CE or the UCI carries identification information of the at least one measurement gap combination among the N measurement gap combinations.

In an embodiment of the present disclosure, the identification information of the at least one measurement gap combination carried by the first MAC CE or the UCI is identification information of at least one measurement gap combination for which the terminal applies for activation.

Further, in an embodiment of the present disclosure, the method further includes:
receiving, by the terminal, a second MAC CE or downlink control information (DCI) transmitted by the base station, where the second MAC CE or the DCI is used to indicate a measurement gap combination to be activated; and
activating, by the terminal, the measurement gap combination indicated by the second MAC CE or the DCI, and performing a positioning measurement by using the activated measurement gap combination.

In other words, after receiving a first MAC CE or UCI indicating that the terminal requests activating a measurement gap combination, the base station transmits a second MAC CE or DCI to the terminal, to inform the terminal which measurement gap combination or combinations to activate. After receiving the second MAC CE or the DCI, the terminal activates a corresponding measurement gap combination, and uses the activated measurement gap combination to start PRS measurement.

It should be noted that in a case where a base station transmits second MAC CE or DCI for activation for multiple times, a terminal adopts the newly received second MAC CE or DCI in an override mode, and the previous activation contents become invalid.

In an optional embodiment of the present disclosure, step 201 includes: receiving, by the terminal, downlink PRS parameter configuration transmitted by a positioning server (for example, location management function (Location Management Function, LMF)), where the downlink PRS parameter configuration includes the measurement gap information, and the measurement gap information is pre-configured by the base station, and then transmitted to the positioning server. That is, after determining the measurement gap information pre-configured for the terminal, the base station transmits the measurement gap information to the positioning server, and the positioning server transmits to the terminal the measurement gap information pre-configured by the base station at the same time when transmitting the downlink PRS parameter configuration for a current positioning service.

Optionally, in the measurement gap information transmitting manner, after the terminal completes the current positioning service, the terminal deletes the measurement gap information.

In another optional embodiment of the present disclosure, step 201 includes: receiving, by the terminal, the measurement gap information transmitted by the base station after the base station receives the first downlink PRS resource from a positioning server, where the first downlink PRS resource is a downlink PRS resource allocated by the positioning server to the terminal. That is, after the base station receives the first downlink PRS resource allocated by the positioning server for the current positioning service of the terminal (i.e., after the base station receives a positioning request for the current positioning service transmitted by the positioning server), the base station may transmit the pre-configured measurement gap information to the terminal.

Optionally, in the measurement gap information transmitting manner, after the terminal completes the current positioning service, the terminal deletes the measurement gap information.

In yet another optional embodiment of the present disclosure, step 201 includes: receiving, by the terminal, a radio resource control (Radio Resource Control, RRC) reconfiguration message transmitted by a base station, where the RRC reconfiguration message carries the measurement gap information. That is, the base station directly transmits the pre-configured measurement gap information to the terminal in the RRC reconfiguration message, and the transmitting manner of the measurement gap information is unrelated to the current positioning service of the terminal.

Optionally, in the measurement gap information transmitting manner, the method further includes: after a current positioning service is completed, deactivating, by the terminal, a corresponding measurement gap combination, and saving the measurement gap information, where the saved measurement gap information is used for a positioning measurement of another positioning service.

As an optional embodiment, the terminal retains the measurement gap information until the terminal receives a radio resource control (RRC) release signaling, and then deletes the measurement gap information.

In an embodiment of the present disclosure, in a case where the base station uses an RRC reconfiguration message to transmit pre-configured measurement gap information, the terminal does not need to delete the measurement gap information immediately after the terminal completes the current positioning service, but a measurement gap combination used in the current positioning service needs to be deactivated; the saved measurement gap information is used for positioning measurement of other positioning services. For example, when a new positioning service request arrives, the terminal can still request to activate at least one measurement gap of the pre-configured measurement gap information through MAC CE or UCI, so as to meet the positioning requirement of the new positioning service. That is, in this way, the pre-configured measurement gap information can work across multiple lightweight presentation protocol (Lightweight Presentation Protocol, LPP) sessions, further reducing the positioning time delay.

As an optional embodiment, the deactivating, by the terminal, the corresponding measurement gap combination includes:
transmitting, by the terminal, deactivation request information to the base station, where the deactivation request information carries identification information of a measurement gap combination for which deactivation is requested;
receiving, by the terminal, deactivation indication information transmitted by the base station, where the deactivation indication information carries identification information of a measurement gap combination to be deactivated by the terminal; and
deactivating, by the terminal, the measurement gap combination indicated by the deactivation indication information according to the deactivation indication information.

To sum up, in the embodiments of the present disclosure, a base station pre-configures measurement gap information for a terminal, and quickly activates a measurement gap combination through MAC CE or control information in a procedure of positioning measurement. It avoids that the terminal does not start to transmit a request for a positioning measurement gap through RRC signaling until there is a positioning measurement, thereby reducing an interaction delay between the terminal and the network in the process of positioning, and further reducing a positioning delay.

As shown in FIG. 3, an embodiment of the present disclosure further provides a method for configuring a measurement gap, which includes:
step 301, pre-configuring, by a base station, measurement gap information for a terminal, where the measurement gap information includes N measurement gap combinations, and N is an integer greater than or equal to 1; and
step 302, activating, by the base station, at least one measurement gap combination in the measurement gap information through a medium access layer control unit (MAC CE) or control information, where the activated measurement gap combination is used for a positioning measurement for the terminal.

In the embodiment of the present disclosure, measurement of a positioning signal is implemented by pre-configuring measurement gap information, that is, a base station pre-configures measurement gap information for a terminal, and quickly activates a measurement gap combination through MAC CE or control information in the process of positioning measurement, so as to realize measurement of the positioning signal. It avoids that the terminal does not start to transmit a request for a positioning measurement gap through RRC signaling until there is a positioning measurement, thereby reducing an interaction delay between the terminal and the network in the process of positioning, and further reducing a positioning delay.

As an optional embodiment, the measurement gap combination includes at least one of a positioning reference signal (PRS) frequency point, a measurement period (such as 20 ms, 40 ms, 80 ms, 160 ms), time-domain offset value (such as 2,8, 16, 32, 64,128 ), a length of a measurement gap (for example, 1.5 ms, 3 ms, 3.5 ms, 4 ms, 5.5 ms, 6 ms), a measurement gap timing advance (for example, 0 ms, 0.25 ms, 0.5 ms). For example, each measurement gap combination corresponds to identification information. For example, different measurement gap combinations have different index IDs, and the terminal and the base station may determine a corresponding measurement gap combination based on the index ID.

In at least one embodiment of the present disclosure, step 301 includes: pre-configuring, by the base station, the measurement gap information for the terminal, in a case where the base station receives a downlink PRS resource of a neighboring cell around the base station from a positioning server. In other words, in a case where there is no positioning requirement, the base station may pre-configure measurement gap information for the terminal in advance according to the downlink PRS resource of the neighboring cell.

Alternatively, step 301 includes: pre-configuring, by the base station, the measurement gap information for the terminal, in a case where the base station receives a downlink PRS resource configured by a positioning server for the terminal from the positioning server. In other words, in a case where there is a positioning requirement, the base station receives a downlink PRS resource configured by a positioning server for the terminal from the positioning server, and then pre-configures more accurate measurement gap information for the terminal.

Example 1, the base station pre-configures measurement gap information.

A positioning server (for example, location management function (Location Management Function, LMF)) configures a downlink PRS (DL-PRS) resource used by a neighboring cell around the base station to the base station according to a configuration relationship of neighboring cells; or, a positioning server configures a DL-PRS resource for a certain terminal, and configures the configured DL-PRS resource to a base station. The DL-PRS resource includes time-domain resources such as a PRS frequency point, a period, and a time-domain offset (offset).

After the base station obtains the DL-PRS resource of the neighboring cell from the LMF, the base station configures corresponding measurement gap information for a certain terminal. The measurement gap information includes multiple measurement gap combinations. The measurement gap combination includes: a DL-PRS frequency point, a corresponding measurement period, an offset, a length of a measurement gap, and a measurement gap timing advance (MGTA). Each combination corresponds to an index ID.

Alternatively, after the base station obtains the DL-PRS resource configured for the terminal from the LMF, the base station configures corresponding measurement gap information for the terminal, the measurement gap information includes multiple measurement gap combinations. The combination include: a combination of a DL-PRS frequency point, a corresponding measurement period, and an offset configured for the terminal, each combination corresponds to an index ID.

It should be noted that when a downlink PRS resource managed by the positioning server (such as a downlink PRS resource of a neighboring cell around the base station or a downlink PRS resource allocated to a corresponding terminal) changes, the positioning server transmits a notification to a base station serving for the terminal, through an NR positioning protocol A (NR Positioning Protocol, NRPPa) message, which includes an updated PRS resource, including time-domain resources such as PRS frequency point, period and offset. After obtaining the updated downlink PRS resource, the serving base station updates the pre-configured measurement gap information according to the updated downlink PRS resource, and notifies the terminal of the updated measurement gap information in an overlay manner. The specific manner of updating the measurement gap information and the manner of transmitting the updated pre-configured measurement gap information are the same as the manners in the first configuration and transmission, and will not be repeated here.

Example 2, configuration update process of measurement gap information. When a DL-PRS resource changes, a corresponding base station also needs to update pre-configured measurement gap information.

After a DL-PRS resource managed by the LMF changes, the LMF notifies it to the serving base station through an NRPPa message, which includes an updated PRS resource, including PRS frequency, period, offset and other time-domain resources.

After obtaining the updated DL-PRS information, the base station updates the pre-configured measurement gap information. The updated measurement gap information is notified to the terminal in an overlay manner, and the measurement gap information is updated. The measurement gap information previously transmitted by the base station is no longer saved.

Optionally, the measurement gap information may be updated in a manner of adding, deleting, or modifying.

Correspondingly, after receiving the updated pre-configured measurement gap information, the terminal overwrites the previous measurement gap information, that is, deleting the previously received measurement gap information.

In an optional embodiment of the present disclosure, step 301 includes: transmitting, by the base station, the measurement gap information to a positioning server, to enable the positioning server to transmit the measurement gap information to the terminal. For example, the positioning server transmits the measurement gap information to the terminal when transmitting the downlink PRS parameter configuration. That is, the base station determines and transmits the measurement gap information pre-configured for the terminal to the positioning server, and the positioning server transmits the measurement gap information pre-configured by the base station to the terminal synchronously when transmitting a downlink PRS parameter configuration for the current positioning service.

Optionally, in the measurement gap information transmitting manner, after the terminal completes the current positioning service, the terminal deletes the measurement gap information.

Example 3, the positioning server delivers measurement gap information pre-configured by the base station.

After receiving a positioning request, the LMF establishes a positioning session (session), transmits a request to a base station where the terminal is located, which requests the base station to provide pre-configured measurement gap information.

After pre-configuring the measurement gap information of the terminal, the base station carries an ID of the terminal and transmits back the measurement gap information pre-configured for the terminal to the LMF.

When the LMF transmits a downlink PRS parameter configuration to the terminal, it also carries the pre-configured measurement gap information.

Alternatively, in another optional embodiment of the present disclosure, step 301 includes: transmitting, by the base station, the measurement gap information to the terminal, after receiving a first downlink PRS resource from the positioning server, where the first downlink PRS resource is a downlink PRS resource allocated by the positioning server for the terminal. That is, after the base station receives the first downlink PRS resource allocated by the positioning server for the current positioning service of the terminal (i.e., after the base station receives a positioning request for the current positioning service transmitted by the positioning server), the base station may transmit the pre-configured measurement gap information to the terminal.

Optionally, in the measurement gap information transmitting manner, after the terminal completes the current positioning service, the terminal deletes the measurement gap information.

Example 4, the base station delivers pre-configured measurement gap information.

After the LMF determines a downlink positioning method for a certain terminal and allocates a DL-PRS resource for the terminal, the LMF will transmit the DL-PRS resource configured for the terminal to a base station serving for the terminal. After receiving the above message from the LMF, the base station configures corresponding measurement gap information for the terminal, and transmits the pre-configured measurement gap information to the terminal.

Alternatively, in another optional embodiment of the present disclosure, step 301 includes: transmitting, by the base station, a radio resource control (RRC) reconfiguration message to the terminal, where the RRC reconfiguration message carries the measurement gap information. That is, the base station directly transmits pre-configured measurement gap information to the terminal in the RRC reconfiguration message, and the measurement gap information transmitting method is unrelated to the current positioning service of the terminal.

Optionally, in the measurement gap information transmitting manner, the terminal does not need to delete the measurement gap information immediately after the terminal has completed the current positioning service, but a measurement gap combination used in the current positioning service needs to be deactivated; the saved measurement gap information is used for positioning measurements of other positioning services.

Example 5, the base station delivers pre-configured measurement gap information.

After pre-configuring the measurement gap information for the terminal, the base station transmits the RRC reconfiguration message carrying the corresponding measurement gap information to the terminal.

The advantage of this solution is that resources are configured in advance before an LPP session, and the measurement gap information can work across the LPP session, thereby further reducing the delay.

In at least one embodiment of the present disclosure, step 302 includes:
receiving, by the base station, a first MAC CE or uplink control information (UCI) transmitted by the terminal, where the first MAC CE or the UCI carries identification information of the at least one measurement gap combination among the N measurement gap combinations; and
transmitting, by the base station, a second MAC CE or downlink control information (DCI) to the terminal, where the second MAC CE or the DCI is used to indicate a measurement gap combination to be activated.

In an embodiment of the present disclosure, the identification information of the at least one measurement gap combination carried by the first MAC CE or the UCI is identification information of the at least one measurement gap combination for which the terminal requests for activation. After receiving the first MAC CE or the UCI that the terminal requests activation of the measurement gap combination, the base station transmits a second MAC CE or DCI to the terminal, to inform the terminal which measurement gap combination or combinations to activate. After receiving the second MAC CE or the DCI, the terminal activates a corresponding measurement gap combination, and uses the activated measurement gap combination to start PRS measurement.

It should be noted that in a case where a base station transmits second MAC CE or DCI for activation for multiple times, a terminal adopts the newly received second MAC CE or DCI in an overlap mode, and the previous activation contents become invalid.

In at least one embodiment of the present disclosure, in a case where measurement gap information is carried in the RRC reconfiguration message in the embodiment of the present disclosure, the measurement gap information is used for a positioning measurement of another positioning service, thus, the terminal needs to deactivate a measurement gap combination used by a current positioning service after having completed the current positioning service. Therefore, in a case where the measurement gap information is carried by the RRC reconfiguration message, the method further includes:
receiving, by the base station, a deactivation request information transmitted by the terminal, where the deactivation request information carries identification information of a measurement gap combination for which deactivation is requested; and
transmitting, by the base station, deactivation indication information to the terminal according to the deactivation request information, where the deactivation indication information carries identification information of a measurement gap combination to be deactivated by the terminal.

To sum up, in the embodiments of the present disclosure, a base station pre-configures measurement gap information for a terminal, and quickly activates a measurement gap combination through MAC CE or control information during a positioning measurement. It avoids that the terminal does not start to transmit a request for a positioning measurement gap through RRC signaling until there is a positioning measurement, thereby reducing an interaction delay between the terminal and the network in the process of positioning, and further reducing a positioning delay.

In order to more clearly describe the method for determining the measurement gap and the method for configuring the measurement gap according to the embodiments of the present disclosure, several examples are used below for illustration.

Example 6, activating pre-configured measurement gap combination.

When the terminal receives the positioning request information from the LMF and finds that both a PRS measurement and a measurement gap are needed by itself, the terminal transmits uplink MAC CE, or RRC signaling, or UCI to a serving base station, which carries IDs of a single or multiple measurement gap combinations for which activation are requested.

After receiving the request, the base station transmits downlink MAC CE, or RRC signaling, or DCI according to a current resource scheduling situation of the terminal and an ID of the measurement gap combination for which activation is requested, and informs the terminal which measurement gap combination or combinations are to be used.

After receiving the downlink MAC CE, or RRC, or DCI, the terminal activates the measurement gap combination indicated by the downlink MAC CE, or RRC, or DCI, and starts measuring PRS.

When the terminal finds that the current configuration is not suitable, the terminal may transmit a request again, which may be carried by MAC CE, or RRC, or DCI, and carries an ID of a measurement gap combination for which activation is requested.

The serving base station transmits MAC CE, or RRC, or DCI to activate a new measurement gap combination, and the previously activated measurement gap combination becomes invalid, i.e., in an overlay mode.

Example 7, deactivation process corresponding to Example 5.

In a case where pre-configured measurement gap information is carried in an RRC reconfiguration message, after the terminal has completed a positioning measurement, the terminal re-transmits uplink MAC CE, or RRC signaling, or UCI to a serving base station, to request deactivation of the measurement gap combination; and the terminal retains the pre-configured measurement gap information. For example, 1 bit or multiple bits in the MAC CE or RRC signaling or UCI indicates requesting a corresponding activation or deactivation. For example, the MAC CE carries an identifier of measurement gap combination 1 and an identifier of measurement gap combination 2, and the MAC CE includes a function indication field. If the function indication field is 1, it indicates that the MAC CE is used to request activation of the measurement gap combination 1 and the measurement gap combination 2; if the function indication field is 0, it indicates that the MAC CE is used to request deactivation of the measurement gap combination 1 and the measurement gap combination 2.

After receiving the request, the serving base station transmits downlink MAC CE or RRC signaling or DCI for deactivation to the terminal, and the downlink MAC CE or RRC signaling or DCI carries an identifier of at least one measurement gap combination.

After receiving the downlink MAC CE or RRC signaling or DCI, the terminal deactivates measurement gap combination indicated in the downlink MAC CE or RRC signaling or DCI, but still retains the pre-configured measurement gap information.

Example 8, process of deconfiguration (deconfiguration may also be referred to as deletion) of measurement gap information.

After completing a positioning measurement, the terminal no longer retains the measurement gap information configured for the terminal. Corresponding to Example 3 where the positioning server transmits the measurement gap information pre-configured by the base station, and Example 4 where the base station transmits pre-configured measurement gap information, the terminal deletes the pre-configured measurement gap information after completing the positioning measurement.

Alternatively, after completing the positioning measurement, the terminal retains the pre-configured measurement gap information, which corresponds to Example 5 where the base station transmits the pre-configured measurement gap information through an RRC reconfiguration message. When a new positioning request arrives, the terminal still requests to activate one or more measurement gap combinations in the pre-configured measurement gap information through uplink MAC CE or RRC signaling or UCI. When the terminal is released and enters a connected state again, the previously pre-configured measurement gap information is deleted.

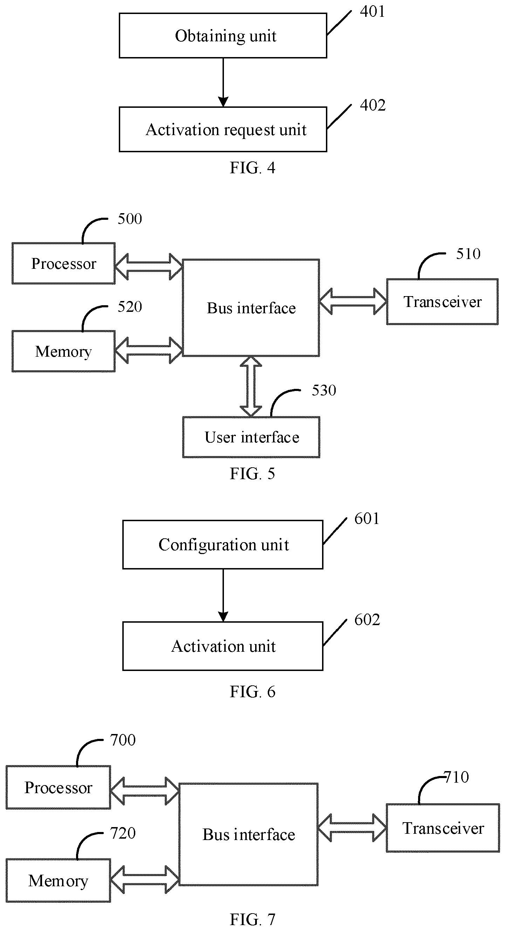

As shown in FIG. 4, an embodiment of the present disclosure further provides an apparatus for determining a measurement gap, which includes:
an obtaining unit 401, configured to obtain pre-configured measurement gap information, where the measurement gap information includes N measurement gap combinations, and N is an integer greater than or equal to 1; and
an activation request unit 402, configured to configured to request activating at least one measurement gap combination in the measurement gap information through a medium access layer control unit (MAC CE) or control information.

As an optional embodiment, the measurement gap combination includes at least one of a positioning reference signal (PRS) frequency point, a measurement period, a time-domain offset value, a measurement gap length, or a measurement gap timing advance.

As an optional embodiment, the activation request unit includes: an activation request subunit, configured to transmit a first MAC CE or uplink control information (UCI) to a base station, where the first MAC CE or the UCI carries identification information of the at least one measurement gap combination among the N measurement gap combinations

As an optional embodiment, the apparatus further includes:
a receiving unit, configured to receive a second MAC CE or downlink control information (DCI) transmitted by the base station, where the second MAC CE or the DCI is used to indicate a measurement gap combination to be activated; and
a measurement unit, configured to activate the measurement gap combination indicated by the second MAC CE or the DCI, and perform a positioning measurement by using the activated measurement gap combination.

As an optional embodiment, the obtaining unit includes:
a first obtaining subunit, configured to receive a downlink PRS parameter configuration transmitted by a positioning server, where the downlink PRS parameter configuration includes the measurement gap information, and the measurement gap information is pre-configured by the base station and transmitted to the positioning server; or,
a second obtaining subunit, configured to receive the measurement gap information transmitted by a base station after the base station receives a first downlink PRS resource transmitted by a positioning server, where the first downlink PRS resource is a downlink PRS resource allocated by the positioning server to the terminal.

As an optional embodiment, the apparatus further includes: a deleting unit, configured to delete the measurement gap information, after a current positioning service is completed.

As an optional embodiment, the obtaining unit includes: a third obtaining subunit, configured to receive a radio resource control (RRC) reconfiguration message transmitted by a base station, where the RRC reconfiguration message carries the measurement gap information.

As an optional embodiment, the apparatus further includes: a deactivation unit, configured to deactivate a corresponding measurement gap combination after a current positioning service is completed, and save the measurement gap information, where the saved measurement gap information is used for a positioning measurement of another positioning service.

As an optional embodiment, the deactivation unit includes:
a deactivation transmitting subunit, configured for the terminal to transmit deactivation request information to the base station, where the deactivation request information carries identification information of a measurement gap combination for which deactivation is requested;
a deactivation receiving subunit, configured to receive deactivation indication information transmitted by the base station, where the deactivation indication information carries identification information of a measurement gap combination to be deactivated by the terminal; and
a deactivation subunit, configured to deactivate the measurement gap combination indicated by the deactivation indication information according to the deactivation indication information.

In the embodiments of the present disclosure, a base station pre-configures measurement gap information for a terminal, and quickly activates a measurement gap combination through MAC CE or control information during a positioning measurement; which avoids that the terminal does not start to transmit a request for a positioning measurement gap through RRC signaling until there is a positioning measurement, thereby reducing an interaction delay between the terminal and the network in the process of positioning, and further reducing a positioning delay. Furthermore, the pre-configured measurement gap information can work across multiple LPP sessions, which further reduces the positioning delay.

The method and the apparatus are based on the same application idea. Since principles of the method and the apparatus for solving the problems are similar, reference can be made to each other for implementations of the method and the apparatus, which will not be repeated herein.

As shown in FIG. 5, an embodiment of the present disclosure further provides a terminal, which includes a memory 520, a transceiver 510, and a processor 500.

The memory 520 is configured to store a computer program; the transceiver 510 is configured to transmit and receive data under the control of the processor 500; the processor 500 is configured to read the computer program in the memory 520 and perform the following operations:
obtaining pre-configured measurement gap information, where the measurement gap information includes N measurement gap combinations, and N is an integer greater than or equal to 1; and
requesting activating at least one measurement gap combination in the measurement gap information through a medium access layer control unit (MAC CE) or control information.

As an optional embodiment, the measurement gap combination includes at least one of a positioning reference signal (PRS) frequency point, a measurement period, a time-domain offset value, a measurement gap length, or a measurement gap timing advance.

As an optional embodiment, the processor is further configured to read the computer program in the memory and perform the following operations: transmitting a first MAC CE or uplink control information (UCI) to a base station, where the first MAC CE or the UCI carries identification information of the at least one measurement gap combination among the N measurement gap combinations.

As an optional embodiment, the processor is further configured to read the computer program in the memory and perform the following operations:
receiving a second MAC CE or downlink control information (DCI) transmitted by the base station, where the second MAC CE or the DCI is used to indicate a measurement gap combination to be activated; and
activating the measurement gap combination indicated by the second MAC CE or the DCI, and performing a positioning measurement by using the activated measurement gap combination.

As an optional embodiment, the processor is further configured to read the computer program in the memory and perform the following operations:
receiving a downlink PRS parameter configuration transmitted by a positioning server, where the downlink PRS parameter configuration includes the measurement gap information, and the measurement gap information is pre-configured by the base station, and further transmitted to the positioning server; or
receiving the measurement gap information transmitted by a base station after the base station receives a first downlink PRS resource transmitted by a positioning server, where the first downlink PRS resource is a downlink PRS resource allocated by the positioning server to the terminal.

As an optional embodiment, the processor is further configured to read the computer program in the memory and perform the following operations: deleting the measurement gap information, after a current positioning service is completed.

As an optional embodiment, the processor is further configured to read the computer program in the memory and perform the following operations: receiving a radio resource control (RRC) reconfiguration message transmitted by a base station, where the RRC reconfiguration message carries the measurement gap information.

As an optional embodiment, the processor is further configured to read the computer program in the memory and perform the following operations: deactivating a corresponding measurement gap combination after a current positioning service is completed, and saving the measurement gap information, where the saved measurement gap information is used for a positioning measurement of another positioning service.

As an optional embodiment, the processor is further configured to read the computer program in the memory and perform the following operations:
transmitting deactivation request information to the base station, where the deactivation request information carries identification information of a measurement gap combination for which deactivation is requested;
receiving deactivation indication information transmitted by the base station, where the deactivation indication information carries identification information of a measurement gap combination to be deactivated by the terminal; and
deactivating the measurement gap combination indicated by the deactivation indication information according to the deactivation indication information.

In FIG. 5, the bus architecture may include any number of interconnected buses and bridges. Specifically, various circuits of one or more processors represented by the processor 500 and a memory represented by the memory 520 are linked together. The bus architecture may also link various other circuits such as peripheral devices, voltage regulators, power management circuits, etc., which are well-known in the art, and therefore, no further descriptions are provided herein. The bus interface provides an interface. The transceiver 510 may be a plurality of elements, that is, include a transmitter and a receiver, and provide a unit for communicating with various other devices on a transmission medium. For different user equipment, the user interface 530 may also be an interface capable of externally or internally connecting to required equipment. The connected equipment includes but not limited to a keypad, a display, a speaker, a microphone, a joystick, and the like.

The processor 500 is responsible for managing the bus architecture and general processing, and the memory 520 may store data used by the processor 500 when performing operations.

Optionally, the processor 510 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

The processor is configured to execute any one of the methods provided in the embodiments of the present disclosure according to the obtained executable instructions by invoking the computer program stored in the memory. The processor and the memory may also be physically separated.

In the embodiments of the present disclosure, a base station pre-configures measurement gap information for a terminal, and quickly activates a measurement gap combination through MAC CE or control information during a positioning measurement; which avoids that the terminal does not start to transmit a request for a positioning measurement gap through RRC signaling until there is a positioning measurement, thereby reducing an interaction delay between the terminal and the network in the process of positioning, and further reducing a positioning delay. Furthermore, the pre-configured measurement gap information can work across multiple LPP sessions, which further reduces the positioning delay.

Since the principle of the terminal to solve the problem is similar to the principle of the method for determining the measurement gap in the embodiment of the present disclosure, reference can be made to the implementation of the method for the implementation of the terminal, which will not be repeated herein.

As shown in FIG. 6, an embodiment of the present disclosure further provides an apparatus for configuring a measurement gap, which includes:
a configuration unit 601, configured to pre-configure measurement gap information for a terminal, where the measurement gap information includes N measurement gap combinations, and N is an integer greater than or equal to 1; and
an activation unit 602, configured to activate at least one measurement gap combination in the measurement gap information through a medium access layer control unit (MAC CE) or control information, where the activated measurement gap combination is used for a positioning measurement for the terminal.

As an optional embodiment, the configuration unit includes:
a first configuration subunit, configured to pre-configure the measurement gap information for the terminal, in a case where the base station receives a downlink PRS resource of a neighboring cell around the base station from a positioning server; or
a second configuration subunit, configured to pre-configure the measurement gap information for the terminal, in a case where the base station receives a downlink PRS resource configured by a positioning server for the terminal from the positioning server; or

As an optional embodiment, the measurement gap combination includes at least one of a positioning reference signal (PRS) frequency point, a measurement period, a time-domain offset value, a measurement gap length, or a measurement gap timing advance.

As an optional embodiment, the configuration unit includes:
a third configuration subunit, configured to transmit the measurement gap information to a positioning server, to enable the positioning server to transmit the measurement gap information to the terminal; or
a fourth configuration subunit, configured to transmit the measurement gap information to the terminal, after a first downlink PRS resource is received from a positioning server, where the first downlink PRS resource is a downlink PRS resource allocated by the positioning server for the terminal; or
a fifth configuration subunit, configured to transmit a radio resource control (RRC) reconfiguration message to the terminal, where the RRC reconfiguration message carries the measurement gap information.

As an optional embodiment, the activation unit includes:
an activation receiving subunit, configured to receive a first MAC CE or uplink control information (UCI) transmitted by the terminal, where the first MAC CE or the UCI carries identification information of the at least one measurement gap combination among the N measurement gap combinations; and
an activation transmitting subunit, configured to transmit a second MAC CE or downlink control information (DCI) to the terminal, where the second MAC CE or the DCI is used to indicate a measurement gap combination to be activated.

As an optional embodiment, in a case where the measurement gap information is carried by the RRC reconfiguration message, the apparatus further includes:
an request receiving unit, configured to receive a deactivation request information transmitted by the terminal, where the deactivation request information carries identification information of a measurement gap combination for which deactivation is requested; and
an indication transmitting unit, configured to transmit deactivation indication information to the terminal according to the deactivation request information, where the deactivation indication information carries identification information of a measurement gap combination to be deactivated by the terminal.

In the embodiments of the present disclosure, a base station pre-configures measurement gap information for a terminal, and quickly activates a measurement gap combination through MAC CE or control information in a procedure of positioning measurement. It avoids that the terminal does not start to transmit a request for a positioning measurement gap through RRC signaling until there is a positioning measurement, thereby reducing an interaction delay between the terminal and the network in the process of positioning, and further reducing a positioning delay. Furthermore, the pre-configured measurement gap information can work across multiple LPP sessions, which further reduces the positioning delay.

The method and the apparatus are based on the same application idea. Since principles of the method and the apparatus to solve the problems are similar, reference can be made to each other for implementations of the method and the apparatus, which will not be repeated herein.

As shown in FIG. 7, an embodiment of the present disclosure further provides a base station, including a memory 720, a transceiver 710, and a processor 700. The memory 720 is configured to store a computer program; the transceiver 710 is configured to transmit and receive data under the control of the processor 700; the processor 700 is configured to read the computer program in the memory 720 and perform the following operations:
pre-configuring measurement gap information for a terminal, where the measurement gap information includes N measurement gap combinations, and N is an integer greater than or equal to 1; and
activating at least one measurement gap combination in the measurement gap information through a medium access layer control unit (MAC CE) or control information, where the activated measurement gap combination is used for a positioning measurement for the terminal.

As an optional embodiment, the processor is further configured to read the computer program in the memory and perform the following operations:
pre-configuring the measurement gap information for the terminal, in a case where the base station receives a downlink PRS resource of a neighboring cell around the base station from a positioning server; or
pre-configuring the measurement gap information for the terminal, in a case where the base station receives a downlink PRS resource configured by a positioning server for the terminal from the positioning server.

As an optional embodiment, the measurement gap combination includes at least one of a positioning reference signal (PRS) frequency point, a measurement period, a time-domain offset value, a measurement gap length, or a measurement gap timing advance.

As an optional embodiment, the processor is further configured to read the computer program in the memory and perform the following operations:
transmitting the measurement gap information to a positioning server, to enable the positioning server to transmit the measurement gap information to the terminal; or
transmitting the measurement gap information to the terminal, after a first downlink PRS resource is received from a positioning server, where the first downlink PRS resource is a downlink PRS resource allocated by the positioning server for the terminal; or
transmitting a radio resource control (RRC) reconfiguration message to the terminal, where the RRC reconfiguration message carries the measurement gap information.

As an optional embodiment, the processor is further configured to read the computer program in the memory and perform the following operations:
receiving a first MAC CE or uplink control information (UCI) transmitted by the terminal, where the first MAC CE or the UCI carries identification information of the at least one measurement gap combination among the N measurement gap combinations; and
transmitting a second MAC CE or downlink control information (DCI) to the terminal, where the second MAC CE or the DCI is used to indicate a measurement gap combination to be activated.

As an optional embodiment, in a case where the measurement gap information is carried by the RRC reconfiguration message, the processor is further configured to read the computer program in the memory and perform the following operations:
receiving a deactivation request information transmitted by the terminal, where the deactivation request information carries identification information of a measurement gap combination for which deactivation is requested; and
transmitting deactivation indication information to the terminal according to the deactivation request information, where the deactivation indication information carries identification information of a measurement gap combination to be deactivated by the terminal.

In FIG. 7, the bus architecture may include any number of interconnected buses and bridges. Specifically, various circuits of one or more processors represented by the processor 700 and a memory represented by the memory 720 are linked together. The bus architecture may also link various other circuits such as peripheral devices, voltage regulators, power management circuits, etc., which are well-known in the art, and therefore, no further descriptions are provided herein. The bus interface provides an interface. The transceiver 710 may be a plurality of elements, that is, include a transmitter and a receiver, and provide a unit for communicating with various other devices on transmission media. The transmission medium include wireless channel, wired channel, optical cable and other transmission media. The processor 700 is responsible for managing the bus architecture and general processing, and the memory 720 may store data used by the processor 700 when performing operations.

The processor 700 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

In the embodiments of the present disclosure, a base station pre-configures measurement gap information for a terminal, and quickly activates a measurement gap combination through MAC CE or control information during a positioning measurement; which avoids that the terminal does not start to transmit a request for a positioning measurement gap through RRC signaling until there is a positioning measurement, thereby reducing an interaction delay between the terminal and the network in the process of positioning, and further reducing a positioning delay. Furthermore, the pre-configured measurement gap information can work across multiple LPP sessions, which further reduces the positioning delay.

Since the principle of the base station to solve the problem is similar to the principle of the method for configuring the measurement gap in the embodiment of the present disclosure, reference can be made to the implementation of the method for the implementation of the base station, which will not be repeated herein.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor (processor) to execute part or all of the steps of the methods described in the various embodiments of the present disclosure. The aforementioned storage media include: universal serial bus (USB) flash drive, removable hard disk, read-only memory (Read-Only Memory, ROM), random access memory (Random Access Memory, RAM), magnetic disk, optical disc or other media that can store program codes.

An embodiment of the present disclosure further provides a processor-readable storage medium, the processor-readable storage medium stores a computer program, and the computer program is configured to enable a processor to perform each step in the above embodiments about the method for determining a measurement gap and the method for configuring a measurement gap. The processor readable storage medium may be any available medium or data storage device that can be accessed by the processor, including but not limited to magnetic storage (such as floppy disk, hard disk, magnetic tape, magneto-optical disk (MO)), optical storage (such as compact disc (CD), digital versatile disc (DVD), blue-ray disc (BD), high-definition versatile disc (HVD)), and semiconductor memory (such as ROM, erasable programmable ROM (EPROM), electrically erasable programmable ROM (EEPROM), non-volatile memory (NAND FLASH), solid-state drive (SSD)), etc.

Those skilled in the art should appreciate that the embodiments of the present disclosure may be provided as a method, a system, or a computer program product. Therefore, the present disclosure may take the form of complete hardware embodiments, complete software embodiments, or embodiments combining software and hardware. Moreover, the present disclosure may take the form of a computer program product implemented on one or more computer usable storage media (including but not limited to magnetic disk storage, optical storage, etc.) including a computer usable program code.

The present disclosure is described with reference to the flow chart and/or the block diagram of the method, device (system), and computer program product according to the embodiments of the present disclosure. It should be appreciated that each of processes and/or blocks in a flow chart and/or block diagram, and a combination of the processes and/or blocks in the flow chart and/or block diagram may be implemented by computer executable instructions. These computer executable instructions may be provided to a processor of a general-purpose computer, a specialized computer, an embedded processing device, or other programmable data processing devices to generate a machine, such that the instructions, which are executed via the processor of the computer or other programmable data processing terminal device, create means for implementing the functions specified in the flow diagram flow or flows and/or block diagram block or blocks.

These processor executable instructions may also be stored in processor-readable memory that may guide computers or other programmable data processing devices to work in a specific way, causing the instructions stored in the processor readable memory to generate a manufacturing product including instruction devices that implement the functions specified in the flow diagram flow or flows and/or block diagram block or blocks.

These processor executable instructions may also be loaded onto a computer or other programmable data processing device, enabling a series of operational steps to be performed on the computer or other programmable device to generate computer-implemented processing, such that the instructions which are executed on the computer or other programmable terminal device provide steps for implementing the functions specified in the flow diagram flow or flows and/or block diagram block or blocks.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present disclosure are used for distinguishing similar objects and are not necessarily used for describing a specific order or sequence. It should be understood that the terms used in this way may be interchanged under appropriate circumstances, so that the embodiments of the present disclosure described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device. Moreover, the term "and/or" used in the specification and the claims indicates at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure shall also intend to include these modifications and variations.

## Claims

1. A method for determining a measurement gap, comprising:
obtaining, by a terminal, pre-configured measurement gap information, wherein the measurement gap information comprises N measurement gap combinations, and N is an integer greater than or equal to 1; and
requesting, by the terminal, activating at least one measurement gap combination in the measurement gap information through a medium access layer control unit (MAC CE) or control information.

2. The method according to claim 1, wherein the measurement gap combination comprises at least one of a positioning reference signal (PRS) frequency point, a measurement period, a time-domain offset value, a measurement gap length, or a measurement gap timing advance.

3. The method according to claim 1, wherein the requesting, by the terminal, activating the at least one measurement gap combination through the MAC CE or the control information comprises:
transmitting, by the terminal, a first MAC CE or uplink control information (UCI) to a base station, wherein the first MAC CE or the UCI carries identification information of the at least one measurement gap combination among the N measurement gap combinations.

4. The method according to claim 1 or 3, further comprising:
receiving, by the terminal, a second MAC CE or downlink control information (DCI) transmitted by a base station, wherein the second MAC CE or the DCI is used to indicate a measurement gap combination to be activated; and
activating, by the terminal, the measurement gap combination indicated by the second MAC CE or the DCI, and performing a positioning measurement by using the activated measurement gap combination.

5. The method according to claim 1, wherein the obtaining, by the terminal, the pre-configured measurement gap information comprises:
receiving, by the terminal, the measurement gap information transmitted by a positioning server, wherein the measurement gap information is pre-configured by a base station, and then transmitted to the positioning server; or
receiving, by the terminal, the measurement gap information transmitted by a base station after the base station receives a first downlink PRS resource transmitted by a positioning server, wherein the first downlink PRS resource is a downlink PRS resource allocated by the positioning server to the terminal.

6. The method according to claim 5, further comprising:
deleting, by the terminal, the measurement gap information, after a current positioning service is completed.

7. The method according to claim 1, wherein the obtaining, by the terminal, the pre-configured measurement gap information comprises:
receiving, by the terminal, a radio resource control (RRC) reconfiguration message transmitted by a base station, wherein the RRC reconfiguration message carries the measurement gap information.

8. The method according to claim 7, further comprising:
deactivating, by the terminal, a corresponding measurement gap combination after a current positioning service is completed, and saving the measurement gap information, wherein the saved measurement gap information is used for a positioning measurement of another positioning service.

9. The method according to claim 8, wherein the deactivating, by the terminal, the corresponding measurement gap combination comprises:
transmitting, by the terminal, deactivation request information to the base station, wherein the deactivation request information carries identification information of a measurement gap combination for which deactivation is requested;
receiving, by the terminal, deactivation indication information transmitted by the base station, wherein the deactivation indication information carries identification information of a measurement gap combination to be deactivated by the terminal; and
deactivating, by the terminal, the measurement gap combination indicated by the deactivation indication information according to the deactivation indication information.

10. A method for configuring a measurement gap, comprising:
pre-configuring, by a base station, measurement gap information for a terminal, wherein the measurement gap information comprises N measurement gap combinations, and N is an integer greater than or equal to 1; and
activating, by the base station, at least one measurement gap combination in the measurement gap information through a medium access layer control unit (MAC CE) or control information, wherein the activated measurement gap combination is used for a positioning measurement for the terminal.

11. The method according to claim 10, wherein the pre-configuring, by the base station, the measurement gap information for the terminal comprises:
pre-configuring, by the base station, the measurement gap information for the terminal, in a case where the base station receives a downlink PRS resource of a neighboring cell around the base station from a positioning server; or
pre-configuring, by the base station, the measurement gap information for the terminal, in a case where the base station receives a downlink PRS resource configured by a positioning server for the terminal from the positioning server.

12. The method according to claim 10, wherein the measurement gap combination comprises at least one of: a positioning reference signal (PRS) frequency point, a measurement period, a time-domain offset value, a measurement gap length, or a measurement gap timing advance.

13. The method according to claim 10, wherein the pre-configuring, by the base station, the measurement gap information for the terminal comprises:
transmitting, by the base station, the measurement gap information to a positioning server, to enable the positioning server to transmit the measurement gap information to the terminal; or
transmitting, by the base station, the measurement gap information to the terminal, after a first downlink PRS resource is received from a positioning server, wherein the first downlink PRS resource is a downlink PRS resource allocated by the positioning server for the terminal; or
transmitting, by the base station, a radio resource control (RRC) reconfiguration message to the terminal, wherein the RRC reconfiguration message carries the measurement gap information.

14. The method according to claim 10, wherein the activating, by the base station, the at least one measurement gap combination in the measurement gap information through the MAC CE or the control information comprises:
receiving, by the base station, a first MAC CE or uplink control information (UCI) transmitted by the terminal, wherein the first MAC CE or the UCI carries identification information of the at least one measurement gap combination among the N measurement gap combinations; and
transmitting, by the base station, a second MAC CE or downlink control information (DCI) to the terminal, wherein the second MAC CE or the DCI is used to indicate a measurement gap combination to be activated.

15. The method according to claim 13, wherein, in a case where the measurement gap information is carried by the RRC reconfiguration message, the method further comprises:
receiving, by the base station, a deactivation request information transmitted by the terminal, wherein the deactivation request information carries identification information of a measurement gap combination for which deactivation is requested; and
transmitting, by the base station, deactivation indication information to the terminal according to the deactivation request information, wherein the deactivation indication information carries identification information of a measurement gap combination to be deactivated by the terminal.

16. An apparatus for determining a measurement gap, comprising:
an obtaining unit, configured to obtain pre-configured measurement gap information, wherein the measurement gap information comprises N measurement gap combinations, and N is an integer greater than or equal to 1; and
an activation request unit, configured to request activating at least one measurement gap combination in the measurement gap information through a medium access layer control unit (MAC CE) or control information.

17. A terminal, comprising a memory, a transceiver and a processor, wherein the memory is configured to store a computer program, the transceiver is configured to transmit and receive data under the control of the processor, the processor is configured to read the computer program in the memory and perform the following operations:
obtaining pre-configured measurement gap information, wherein the measurement gap information comprises N measurement gap combinations, and N is an integer greater than or equal to 1; and
requesting activating at least one measurement gap combination in the measurement gap information through a medium access layer control unit (MAC CE) or control information.

18. The terminal according to claim 17, wherein the measurement gap combination comprises at least one of: a positioning reference signal (PRS) frequency point, a measurement period, a time-domain offset value, a measurement gap length, or a measurement gap timing advance.

19. The terminal according to claim 17, wherein the processor is further configured to read the computer program in the memory and perform the following operations:
receiving the measurement gap information transmitted by a positioning server, wherein the measurement gap information is pre-configured by a base station, and then transmitted to the positioning server; or
receiving the measurement gap information transmitted by a base station after the base station receives a first downlink PRS resource transmitted by a positioning server, wherein the first downlink PRS resource is a downlink PRS resource allocated by the positioning server to the terminal.

20. The terminal according to claim 17, wherein the processor is further configured to read the computer program in the memory and perform the following operations:
receiving a radio resource control (RRC) reconfiguration message transmitted by a base station, wherein the RRC reconfiguration message carries the measurement gap information.

21. The terminal according to claim 20, wherein the processor is further configured to read the computer program in the memory and perform the following operations:
after a current positioning service is completed, deactivating a corresponding measurement gap combination, and saving the measurement gap information, wherein the saved measurement gap information is used for a positioning measurement of another positioning service.

22. An apparatus for configuring a measurement gap, comprising:
a configuration unit, configured to pre-configure measurement gap information for a terminal, wherein the measurement gap information comprises N measurement gap combinations, and N is an integer greater than or equal to 1; and
an activation unit, configured to activate at least one measurement gap combination in the measurement gap information through a medium access layer control unit (MAC CE) or control information, wherein the activated measurement gap combination is used for a positioning measurement for the terminal.

23. Abase station, comprising a memory, a transceiver and a processor, wherein the memory is configured to store a computer program; the transceiver is configured to transmit and receive data under the control of the processor; the processor is configured to read the computer program in the memory and perform the following operations:
pre-configuring measurement gap information for a terminal, wherein the measurement gap information comprises N measurement gap combinations, and N is an integer greater than or equal to 1; and
activating at least one measurement gap combination in the measurement gap information through a medium access layer control unit (MAC CE) or control information, wherein the activated measurement gap combination is used for a positioning measurement for the terminal.

24. The base station according to claim 23, wherein the processor is further configured to read the computer program in the memory and perform the following operations:
pre-configuring the measurement gap information for the terminal, in a case where the base station receives a downlink PRS resource of a neighboring cell around the base station from a positioning server; or
pre-configuring the measurement gap information for the terminal, in a case where the base station receives a downlink PRS resource configured by a positioning server for the terminal from the positioning server.

25. The base station according to claim 23, wherein the processor is further configured to read the computer program in the memory and perform the following operations:
transmitting the measurement gap information to a positioning server, to enable the positioning server to transmit the measurement gap information to the terminal; or
transmitting the measurement gap information to the terminal, after a first downlink PRS resource is received from a positioning server, wherein the first downlink PRS resource is a downlink PRS resource allocated by the positioning server for the terminal; or
transmitting a radio resource control (RRC) reconfiguration message to the terminal, wherein the RRC reconfiguration message carries the measurement gap information.

26. A processor-readable storage medium, wherein the processor-readable storage medium stores a computer program, the computer program is configured to cause a processor to execute the method according to any one of claims 1 to 9, or the computer program is configured to cause a processor to execute the method according to any one of claim any one of claims 10 to 15.
